# EUROPÄISCHE PATENTSCHRIFT

(11) **EP 3 762 981 B1**
(45) Veröffentlichungstag und Bekanntmachung des Hinweises auf die Patenterteilung: **22.11.2023**
(21) Anmeldenummer: 19716955.0
(22) Anmeldetag: 16.04.2019
(51) Int. Cl.: H01M 4/131, H01M 4/1391, H01M 4/485, H01M 10/0525, H01M 10/42, H01M 10/04, H01M 10/0587, H01M 50/46

(54) **VERFAHREN ZUM HERSTELLEN EINER LITHIUM-IONEN-ZELLE**
METHOD FOR PRODUCTION OF A LITHIUM-ION-CELL
PROCÉDÉ DE FABRICATION POUR UNE CELLULE LITHIUM-ION

(30) Priorität: 08.03.2018 DE 102018203512
(43) Veröffentlichungstag der Anmeldung: 13.01.2021
(73) Patentinhaber: VARTA Microbattery GmbH, 73479 Ellwangen Jagst (DE)
(72) Erfinder: ULKE, Jakob, 38440 Wolfsburg (DE); BÖRGER, Alexander, 38440 Wolfsburg (DE); CALLES, Simon, 38440 Wolfsburg (DE); KNAPE, Torsten, 38440 Wolfsburg (DE)
(74) Vertreter: Clarenbach, Carl-Philipp
(86) Internationale Anmeldenummer: PCT/EP2019/059859
(87) Internationale Veröffentlichungsnummer: WO 2019/170924

(56) Entgegenhaltungen:
- EP-A1- 2 442 400
- EP-A2- 2 725 641
- JP-A- 2014 127 234
- US-A1- 2011 250 478
- T. Šalkus ET AL: "XPS and ionic conductivity studies on Li1.3Al0.15Y0.15Ti1.7(PO4)3 ceramics", Ionics, vol. 16, no. 7, 2 May 2010 (2010-05-02), pages 631-637, XP055212134, ISSN: 0947-7047, DOI: 10.1007/s11581-010-0433-2

## Beschreibung

Die Erfindung betrifft ein Verfahren zum Herstellen einer Lithium-Ionen-Zelle für einen Energiespeicher eines Kraftfahrzeugs, wobei eine Anode, eine Kathode, ein Elektrolyt sowie ein Separator zwischen Anode und Kathode in dem Elektrolyten und eine Referenzelektrode bereitgestellt werden.

Lithium-Ionen-Zellen und Herstellungsverfahren der eingangs genannten Art sind aus dem Stand der Technik bekannt. In herkömmlichen Lithium-Ionen-Zellen werden üblicherweise Anode und Kathode durch einen Elektrolyten miteinander elektrisch verbunden, der üblicherweise eine nicht-wässrige Elektrolytlösung ist. Durch den zwischen Anode und Kathode angeordneten Separator können Lithium-Ionen frei durch den Elektrolyten zwischen den beiden Elektroden, also Anode und Kathode, wandern. Durch das Hinzufügen einer Referenzelektrode als dritte Elektrode ist es möglich, das Halbzellenpotenzial von Anode und Kathode separat zueinander zu bestimmen, so dass eine detaillierte Aussage über Ladezustand und Alterungszustand der Zelle getroffen werden kann. Üblicherweise bestehen derartige Referenzelektroden aus Lithium-Metall, das jedoch eine geringe Langzeitstabilität aufweist und für impedanzspektroskopische Messungen weniger geeignet ist. Außerdem ist es aus "F. La Mantia, C.D. Wessells, H.D. Deshazer, Yi Curi: Reliable reference electrodes for lithium-ion batteries. Electrochemistry Communications 31 (2013) 141-144", bekannt, Referenzelektroden aus Lithium-Eisenphosphat und Lithium-Titanoxid zu fertigen, wobei die Referenzelektroden punktförmig aufgebracht werden. Aus "J. Costard, M. Ender, M. Weiss, E. Ivers-Tiffée: Three-Electrode Setups for Lithium-ion batteries II", ist es außerdem bekannt, eine Referenzelektrode durch Beschichten eines Metallgitters bereitzustellen.

Die Offenlegungsschrift US 2011250478 A1 offenbart eine Lithium-Ionen-Zelle mit einer Referenzelektrode, die aus Lithiumtitanat gefertigt ist. Aus der Offenlegungsschrift JP 2014127234 A ist es bekannt, eine Referenzelektrode aus Lithiumtitanat-Pulver herzustellen. Auch die Offenlegungsschrift EP 2442400 A1 offenbart eine aus Lithiumtitanat hergestellte Referenzelektrode. Die Referenzelektrode wird mittels eines Gießverfahrens gefertigt.

Der Erfindung liegt die Aufgabe zugrunde, eine verbesserte Lithium-Ionen-Zelle zu schaffen, die sowohl für impedanzspektroskopische Zwecke nutzbar ist und darüber hinaus geringe Alterungserscheinungen aufweist.

Die der Erfindung zugrundeliegende Aufgabe wird durch ein Verfahren zum Herstellen einer Lithium-Ionen-Zelle mit den Merkmalen des Anspruchs 1 gelöst. Die so hergestellte Lithium-Ionen-Zelle hat den Vorteil, dass die Lithium-lonen-Zelle insgesamt eine hohe Lebensdauer aufweist, insbesondere in Bezug auf die verwendete Referenzelektrode, und dass impedanzspektroskopische Messungen insbesondere zur Bestimmung des Alterungszustands der Lithium-Ionen-Zelle sicher und auf lange Zeit hin durchführbar sind. Erfindungsgemäß wird dies dadurch erreicht, dass die Referenzelektrode aus Lithiumtitanat hergestellt wird. Hierdurch ergibt sich eine vorteilhafte Eignung zur impedanzspektroskopischen Messung sowie eine Robustheit der Referenzelektrode, die eine hohe Lebensdauer gewährleistet. Erfindungsgemäß ist die Referenzelektrode aus Lithiumtitanat-Pulver gepresst. Hierdurch ergibt sich eine einfache und kostengünstige Herstellung der Referenzelektrode, die dann zu den zuvor genannten Vorteilen führt.

Erfindungsgemäß ist die Referenzelektrode auf den Separator aufgepresst. Dadurch ist eine einfache Integration der Referenzelektrode in die Lithium-lonen-Zelle gewährleistet.

Erfindungsgemäß wird die Referenzelektrode durch Verpressen von Lithiumtitanat-Pulver hergestellt. Besonders bevorzugt wird die Referenzelektrode durch Längsverschieben eines Pressstempels oder -Stifts hergestellt.

Weiterhin ist erfindungsgemäß vorgesehen, dass die Referenzelektrode direkt auf dem Separator gepresst wird.

Es ergeben sich hierdurch jeweils die zuvor bereits genannten Vorteile. Weitere Vorteile und bevorzugte Merkmale und Merkmalskombinationen ergeben sich insbesondere aus dem zuvor Beschriebenen sowie aus dem Anspruch 1. Im Folgenden soll die Erfindung anhand der Zeichnungen näher erläutert werden. Dazu zeigen:
Figuren 1A und B - eine Lithium-Ionen-Zelle in einer Seitenansicht und in einer Draufsicht,
Figur 2 - eine Vorrichtung zum Herstellen der Lithium-Ionen-Zelle und
Figur 3 - ein Verfahren zum Herstellen der Lithium-lonen-Zelle.

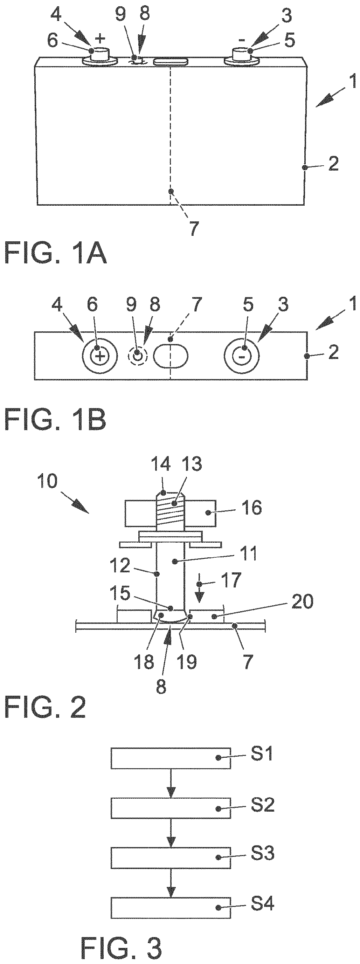

Figuren 1A und 1B zeigen eine Lithium-Ionen-Zelle 1 für einen Energiespeicher eines Kraftfahrzeugs, der insbesondere als Traktionsbatterie für das Kraftfahrzeug benutzt wird. Die Lithium-lonen-Zelle 1 ist in Figur 1A in einer Seitenansicht und in Figur 1B in einer Draufsicht auf die Anschlüsse gezeigt. Die Lithium-lonen-Zelle 1 weist ein Gehäuse 2 auf, in welchem eine Anode 3 und eine Kathode 4 angeordnet sind, von denen hier externe Anschlüsse 5 und 6 von dem Gehäuse 2 vorstehen zu ihrer elektrischen Kontaktierung. In dem Gehäuse 2 ist außerdem ein Elektrolyt, vorzugsweise aus einer nicht-wässrigen Elektrolytlösung, vorhanden, sowie ein Separator 7, durch eine gestrichelte Linie angedeutet, der zwischen Anode 3 und Kathode 4 liegt.

Außerdem weist die Lithium-lonen-Zelle 1 eine Referenzelektrode 8 auf, die einen vom Gehäuse 2 vorstehenden Anschluss 9 zu ihrer elektrischen Kontaktierung aufweist. Die Referenzelektrode 8 ist aus Lithiumtitanat-Pulver gefertigt.

Figur 2 zeigt eine Vorrichtung 10 zur Herstellung der Referenzelektrode 8 der Lithium-Ionen-Zelle 1. Die Vorrichtung 10 weist einen Pressstempel 11 auf, der eine Kunststoffhülse 12 und einen damit verbundenen Metallbolzen 13 aufweist. Der Metallbolzen 13 weist an einem freien Ende ein Gewinde 14 auf, und ist an seinem anderen Ende in die Kunststoffhülse 12 eingeführt. Die Kunststoffhülse 12 weist an ihrem von dem Gewinde 14 abgewandten Ende einen geschlossenen Boden 15 auf, der als Pressstempel dient. Der Metallbolzen 13 wirkt in der Art einer Spindel eines Spindelantriebs und ist entsprechend an seinem freien Ende mit dem Gewinde 14 mit einer Spindelmutter 16 gekoppelt. Durch Rotation der Spindelmutter 16 ist der Pressstempel 11 in seiner Längsrichtung verschiebbar, wie durch einen Pfeil 17 in Figur 2 angezeigt.

Zwischen dem Pressstempel 11 und dem Separator 7 wird Lithiumtitanat-Pulver 18 angeordnet, insbesondere noch bevor der Separator 7 in das Gehäuse 2 eingebracht wird, vorzugsweise in einer Vertiefung beziehungsweise Aussparung 19 einer auf den Separator 7 aufgelegten Maske 20, und anschließend durch den Pressstempel 11 gegen die Anode 7 verpresst, so dass die Referenzelektrode 8 aus Lithiumtitanat erhalten wird.

Figur 3 fasst das Herstellungsverfahren nochmals in einem Flussdiagramm zusammen. In einem ersten Schritt S1 wird die Lithium-Ionen-Zelle 1 mit Kathode 4 und Anode 3 und Elektrolyt bereitgestellt. Gegebenenfalls werden Anode 3 und Kathode auf einem Elektrodenwickel bereitgestellt, der als Basiselement einen den Separator 7 bildenden Streifen aufweist, auf welchem Kathode 4 und Anode 3 angeordnet sind. Bevor dieser Wickel in das Gehäuse 2 eingebracht wird, wird dieser in einem Schritt S2 der Vorrichtung 10 zugeführt und die Referenzelektrode 8 hergestellt.

Im Anschluss wird in einem Schritt S3 der Wickel zusammen mit der Referenzelektrode 8 in das Gehäuse 2 derart eingebracht, dass die Referenzelektrode 8 von außen, wie in Figur 1A gezeigt und entsprechend beschrieben, kontaktierbar ist. Somit wird abschließend die Lithium-lonen-Zelle 1 im Schritt S4 mit vorteilhafter Referenzelektrode 8 aus Lithiumtitanat erhalten, die eine hohe Lebensdauer und vorteilhafte Eigenschaften bei einer impedanzspektroskopischen Messung gewährleistet.

### Bezugszeichenliste

- 1: Lithium-Ionen-Zelle
- 2: Gehäuse
- 3: Anode
- 4: Kathode
- 5: Anschluss
- 6: Anschluss
- 7: Separator
- 8: Referenzelektrode
- 9: Anschluss
- 10: Vorrichtung
- 11: Pressstempel
- 12: Kunststoffhülse
- 13: Metallbolzen
- 14: Gewinde
- 15: Boden
- 16: Spindelmutter
- 17: Pfeil
- 18: Lithiumtitanat-Pulver
- 18: Aussparung
- 20: Maske

## Patentansprüche

1. Verfahren zum Herstellen einer Lithium-Ionen-Zelle (1) für einen Energiespeicher eines Kraftfahrzeugs, mit folgenden Schritten:
- Bereitstellen einer Anode (3), einer Kathode (4), eines Elektrolyten und eines zwischen Anode (3) und Kathode (4) angeordneten/anzuordnenden Separator (7),
- Bereitstellen einer aus Lithiumtitanat hergestellten Referenzelektrode (8),
**dadurch gekennzeichnet, dass** die Referenzelektrode (8) durch Verpressen von Lithiumtitanat-Pulver hergestellt wird, wobei die Referenzelektrode (8) direkt auf dem Separator (7) gepresst wird.

## Claims

1. Method for producing a lithium-ion cell (1) for an energy storage unit of a motor vehicle, comprising the following steps:
- Providing an anode (3), a cathode (4), an electrolyte and a separator (7) arranged/to be arranged between anode (3) and cathode (4),
- Providing a reference electrode (8) produced from lithium titanate,
**characterized in that** the reference electrode (8) is produced by pressing lithium titanate powder, wherein the reference electrode (8) is pressed directly onto the separator (7).

## Revendications

1. Procédé de fabrication pour une cellule lithium-ion (1) pour un dispositif de stockage d'énergie d'un véhicule automobile, avec les étapes suivantes :
- mise à disposition d'une anode (3), d'une cathode (4), d'un électrolyte et d'un séparateur (7) disposé / à disposer entre l'anode (3) et la cathode (4),
- mise à disposition d'une électrode de référence (8) fabriquée en titanate de lithium,
**caractérisé en ce que** l'électrode de référence (8) est fabriquée par pressage d'une poudre de titanate de lithium, dans lequel l'électrode de référence (8) est directement pressée sur le séparateur (7).
